# EUROPÄISCHE PATENTSCHRIFT

(11) **EP 3 767 515 B1**
(45) Veröffentlichungstag und Bekanntmachung des Hinweises auf die Patenterteilung: **08.05.2024**
(21) Anmeldenummer: 19186813.2
(22) Anmeldetag: 17.07.2019
(51) Int. Cl.: G06F 21/76, G06F 21/10, G06F 21/64

(54) **VERFAHREN ZUR DYNAMISCHEN UND PARTIELLEN REKONFIGURATION EINES ELEKTRONISCHEN BAUTEILS**
METHOD FOR THE DYNAMIC AND PARTIAL RECONFIGURATION OF AN ELECTRONIC COMPONENT
PROCÉDÉ DE RÉCONFIGURATION DYNAMIQUE ET PARTIELLE D'UN COMPOSANT ÉLECTRONIQUE

(43) Veröffentlichungstag der Anmeldung: 20.01.2021
(73) Patentinhaber: Siemens Aktiengesellschaft, 80333 München (DE)
(72) Erfinder: Cech, Christian, 2483 Ebreichsdorf (AT); Fischer, Bernhard, 1060 Wien (AT); Hinterstoisser, Thomas, 2102 Bisamberg (AT); Matschnig, Martin, 3430 Tulln (AT); Tomic, Dusan, 1220 Wien (AT)
(74) Vertreter: Siemens Patent Attorneys

(56) Entgegenhaltungen:
- US-B1- 6 785 816
- HIRAK KASHYAP ET AL: "Compact and On-the-Fly Secure Dynamic Reconfiguration for Volatile FPGAs", ACM TRANSACTIONS ON RECONFIGURABLE TECHNOLOGY AND SYSTEMS, Bd. 9, Nr. 2, 12. Januar 2016 (2016-01-12) , Seiten 1-22, XP055635049, US ISSN: 1936-7406, DOI: 10.1145/2816822
- Edward Chen ET AL: "Dynamic Partial Reconfigurable FPGA Framework For Agent Systems", , 31. August 2011 (2011-08-31), XP055635372, Gefunden im Internet: URL:https://pdfs.semanticscholar.org/1a44/ 115292771501e1dfc87bcc78844bc0583b26.pdf [gefunden am 2019-10-23]

## Beschreibung

### Technisches Gebiet

Die vorliegende Erfindung betrifft allgemein das Gebiet der programmierbaren logischen Schaltungen wie z.B. Field Programmable Gate Arrays (FPGAs). Im Speziellen bezieht sich die vorliegende Erfindung auf ein Verfahren zur dynamischen und partiellen Rekonfiguration eines elektronischen Bauteils, welcher als programmierbare, logische Schaltung, insbesondere als Field Programmable Gate Array oder FPGA, ausgeführt ist. Das elektronische Bauteil weist dabei neben einem statischen Bereich zumindest einen oder mehrere dynamisch rekonfigurierbare Bereiche auf. Dieser zumindest eine dynamisch rekonfigurierbare Bereich kann durch Nachladen einer jeweiligen Funktionseinheit, welche in Form einer entsprechenden, zugehörigen Konfigurationsdatei für den zumindest einen dynamisch rekonfigurierbaren Bereich in einer Speichereinheit abgelegt ist, während einer Laufzeit des elektronischen Bauteils umprogrammiert werden.

### Stand der Technik

Integrierte Schaltungen, wie z.B. anwendungsspezifische, integrierte Schaltungen (kurz ASICs) oder so genannte Field Programmable Gate Arrays (kurz FPGAs), sind elektronische Bauteile, welche heutzutage in vielen elektrischen und/oder elektronischen Geräten oder Systemen eingesetzt werden. Vor allem mit als programmierbare, integrierte Schaltungen (z.B. FPGAs) ausgeführten, elektronischen Bauteilen können durch entsprechende Konfiguration verschiedene logische Schaltungen und Funktionen realisiert werden. Diese können beispielsweise von einfachen Zählern oder Schnittstellen für Digitalbausteine bis zu hochkomplexen Schaltungen wie z.B. Speicher-Kontroller oder Mikroprozessoren reichen. Programmierbar bezieht sich dabei nicht nur auf eine Vorgabe zeitlicher Abläufe, sondern vor allem auf eine Definition einer Schaltungsstruktur, um eine gewünschte Schaltungsfunktion bzw. Funktion zu erzielen.

Die Definition der gesamten Schaltung bzw. Schaltungsfunktion des elektronischen Bauteils erfolgt in einer so genannten Designphase und wird z.B. in einer Hardwarebeschreibungssprache (z.B. VHDL, Verilog, etc.) formuliert. In einer so genannten Synthesephase wird die Definition der logischen Schaltung beispielsweise von einer Erzeugersoftware bzw. mittels eines Synthesewerkzeugs in eine so genannte Netzliste übersetzt, aus welcher dann schließlich durch so genanntes Placement und Routing ein physikalisches Layout erzeugt wird. Aus der Netzliste wird dann eine entsprechende Konfigurationsdatei abgeleitet, durch welche eine Konfiguration bzw. Verschaltung der physikalischen Elemente des elektronischen Bauteils bzw. der programmierbaren, integrierten Schaltung - für die gesamte Schaltung, aber zumindest für einzelne Schaltungsteile bzw. Funktionseinheiten vorgegeben werden kann.

Durch Laden von zumindest einer Konfigurationsdatei in die programmierbare, integrierte Schaltung (z.B. FPGA) bzw. in das elektronische Bauteil können aufgrund einer entsprechenden Grundstruktur des elektronischen Bauteils logische Schaltungsfunktionen bestehend aus verschiedenen Funktionseinheiten bzw. Schaltungsteilen realisiert werden. Die Grundstruktur einer programmierbaren, integrierten Schaltung wie z.B. einem FPGA ist dabei als Feld (engl. Array) aus bis zu einigen zehntausend konfigurierbaren Basiselementen ausgeführt. Das Laden der jeweiligen Konfigurationsdateien kann aus einer internen oder externen, nicht flüchtigen Speichereinheit (z.B. einer Art EPRPOM, etc.) erfolgen.

Programmierbare, integrierte Schaltungen wie z.B. FPGAs bieten insbesondere aufgrund ihrer Grundstruktur den Vorteil, dass die logische Schaltungsfunktion bzw. einzelne Schaltungsteile bzw. Funktionseinheiten bei Bedarf verändert bzw. rekonfiguriert werden können. Um eine Funktionsweise einer programmierbaren, integrierten Schaltung zu verändern bzw. zu rekonfigurieren, wird beispielsweise eine aktuelle Konfiguration des elektronischen Bauteils gelöscht und zumindest eine neue Konfigurationsdatei geladen, mit welcher der Bauteil neu konfiguriert wird. Dabei ist es allerdings möglich, anstatt einer Konfigurationsdatei zum Konfigurieren des gesamten elektronischen Bauteils, eine oder mehrere Konfigurationsdateien zu verwenden, durch welche nur Bereiche des elektronischen Bauteils bzw. der programmierbaren, integrierten Schaltung neu konfiguriert werden, während andere Bereiche des elektronischen Bauteils unverändert bleiben. Diese Vorgangsweise wird als so genannte partielle Rekonfiguration einer programmierbaren, integrierten Schaltung bezeichnet. In der Designphase der gesamten Schaltungsfunktion des elektronischen Bauteils wird beispielsweise festgelegt, welcher Bereich des elektronischen Bauteils unverändert - d.h. statisch - bleiben soll und welcher Bereich verändert werden kann - d.h. rekonfigurierbar sein soll.

Für die partielle Rekonfiguration kann ein elektronischer Bauteil bzw. eine programmierbare, integrierte Schaltung beispielsweise entweder außer Betrieb gesetzt bzw. abgeschaltet werden oder die partielle Rekonfiguration wird bei einem aktiven, elektronischen Bauteil durchgeführt. D.h. einer oder mehrere als rekonfigurierbare festgelegte Bereiche (d.h. so genannte dynamisch rekonfigurierbare Bereiche) werden rekonfiguriert, während die restliche Schaltung - wie z.B. der als statisch festgelegte Bereich bzw. statische Bereich und gegebenenfalls dynamisch rekonfigurierbare Bereiche, welche nicht neu konfiguriert werden - in Betrieb bleibt.

Eine partielle Rekonfiguration bei einem aktiven elektronischen Bauteil bzw. während einer Laufzeit des elektronischen Bauteils wird als so genannte dynamische partielle Rekonfiguration (kurz: DPR) bezeichnet. Durch die DPR können die Konfiguration und damit Schaltungsteile bzw. Funktionseinheiten der programmierbaren, integrierten Schaltung dynamisch und wiederholt im laufenden Betrieb verändert bzw. angepasst werden.

Für die dynamisch partielle Rekonfiguration eines elektronischen Bauteils bzw. einer integrierten Schaltung ist üblicherweise eine Steuereinheit, welche vom jeweiligen Hersteller des elektronischen Bauteils (z.B. Xilinx, Intel, etc.) im statischen Bereich der integrierten Schaltung integriert ist, notwendig, um den oder die als dynamisch rekonfigurierbar festgelegten Bereiche mit jeweils bereichsspezifischen Konfigurationsdateien für neue Schaltungsteile laden bzw. umprogrammieren zu können. Damit während des Ladevorgangs bzw. der Rekonfiguration eines dynamisch rekonfigurierbaren Bereichs die übrigen Schaltungsbereiche unbeeinflusst bleiben, müssen beispielweise alle Signaleingänge und Signalausgänge dieses rekonfigurierbaren Bereichs von den übrigen Bereichen des elektronischen Bauteils entkoppelt werden. Dazu kann beispielsweise von der Steuereinheit oder bei mehreren dynamisch rekonfigurierbaren Bereichen von einer Prozessoreinheit, welche z.B. im statischen Bereich angeordnet ist, ein Entkopplungssignal an den dynamisch zu rekonfigurierenden Bereich weitergeleitet, um die Signaleingänge und Signalausgänge dieses Bereichs z.B. mittels einer Entkopplungslogik von der übrigen programmierbaren, integrierten Schaltung zu entkoppeln. Auf diese Weise können z.B. ein elektrischer Kurzschluss in der Schaltung und eine gegebenfalls dauerhafte Zerstörung des elektronischen Bauteils durch ein Transferieren einer Konfigurationsdatei aus einer üblicherweise externen Speichereinheit in den dynamisch rekonfigurierbaren Bereich bzw. durch das Umprogrammieren des dynamisch rekonfigurierbaren Bereichs verhindert werden.

Insbesondere wenn ein elektronisches Bauteil nicht nur einen dynamisch rekonfigurierbaren Bereich aufweist, kann eine Zuordnung der jeweiligen Konfigurationsdatei, welche üblicherweise individuell bzw. spezifisch für den jeweiligen dynamisch rekonfigurierbaren Bereich generiert wird, beispielsweise mittels einer Zusatzinformation erfolgen, welche gemeinsam mit der jeweiligen Konfigurationsdatei in der zumeist externen Speichereinheit hinterlegt ist. Mittels dieser Zusatzinformation wird z.B. festgelegt, für welchen dynamisch rekonfigurierbaren Bereich die jeweilige Konfigurationsdatei vorgesehen ist bzw. an welchen dynamisch rekonfigurierbaren Bereich das Entkopplungssignal für eine DPR gesendet werden muss.

Sind nun eine Konfigurationsdatei und/oder die jeweilige Zusatzinformation verändert oder manipuliert worden, so kann im elektronischen Bauteil z.B. von der Steuereinheit oder der Prozessoreinheit nicht mehr erkannt werden, welcher dynamisch rekonfigurierbare Bereich mittels Entkopplungssignal entkoppelt und umprogrammiert werden soll. Die Konfigurationsdatei kann beispielsweise fälschlicherweise in einen anderen dynamisch rekonfigurierbaren Bereich geladen werden, für welchen diese nicht bestimmt ist bzw. welcher nicht durch ein Entkopplungssignal durch die zugehörige Entkopplungslogik entkoppelt wurde. Dadurch kann z.B. der geladene Schaltungsteil im fälschlich ausgewählten, dynamisch rekonfigurierbaren Bereich zerstört und eventuell auch der elektronische Bauteil beschädigt werden, da die zugehörige Entkopplungslogik nicht aktiviert ist.

Aus der Schrift S. Gören et al.: Partial bitstream protection for low-cost FPGAs with physical unclonable function, obfuscation and dynamic partial self reconfiguation, in Computers & Electrical Engineering, Volume 39, Issue 2, February 2013, p. 386-397. ist eine Methode bekannt, eine Konfigurationsdatei für dynamisches partiellen Rekonfigurieren eines FPGAs vor Vervielfältigung, Modifikation und so genanntem Reverse Engineering zu schützen. Dabei werden z.B. die Konfigurationsdateien mit kryptographischen Schlüsseldaten gesichert werden, welche auf Basis einer so genannten Physical Unclonable Function (PUF) basieren. Eine PUF basiert auf Hardwarestrukturen im physikalischen Bauteil bzw. im Halbleiter des Bauteils, durch welche der Halbleiter bzw. der spezielle Bauteil eindeutig identifizierbar ist. Durch die PUFbasierten Schlüsseldaten, mit welchen die Konfigurationsdaten gesichert sind, kann zwar einen eindeutige Zuordnung zu einem speziellen elektronischen Bauteil bzw. FPGA vorgenommen werden, es ist allerdings nicht möglich, die jeweilige Konfigurationsdatei eindeutig zu dem dafür vorgesehen dynamisch rekonfigurierbaren Bereich zuzuordnen. D.h. es kann mit dieser Methode nicht verhindert werden, dass eine Konfigurationsdatei in einem nicht dafür vorgesehenen, dynamisch rekonfigurierbaren Bereich geladen wird.

In der Veröffentlichung HIRAK KASHYAP ET AL: "Compact and Onthe-Fly Secure Dynamic Reconfiguration for Volatile FPGAs", ACM TRANSACTIONS ON RECONFIGURABLE TECHNOLOGY AND SYSTEMS, Bd. 9, Nr. 2, 12. Januar 2016 (2016-01-12), Seiten 1-22, XP055635049, US ISSN: 1936-7406, DOI: 10.1145/2816822 ist ein Verfahren zur sicheren und dynamischen Rekonfiguration für volatile FPGAs bekannt, für welche die Konfigurationsdaten in Form von Bitstreams ungesichert und extern gespeichert sind und beim Hochfahren des FPGAs laden, um das FPGA zu konfigurieren bzw. bei Bitstreams für partielle Konfiguration werden diese entsprechend den dynamischen Anforderungen später in das FPGA während der Laufzeit in das FPGA geladen. Dabei wird ein einzigartiger Schlüssel durch einen Zufallsgenerator generiert, um den Bitstream neuerlich zu verschlüsseln, welcher eindeutig dem Bitstream Bi (d.h. der Konfigurationsdatei) zugeordnet ist. D.h. jeder von einem IP-Lieferanten gelieferte Bitstream erhält einen eigenen, einzigartigen Schlüssel, mit dem er neulich vor dem Speichern verschlüsselt wird. Jedoch können dabei nicht Veränderungen und/oder Manipulationen bei Funktionseinheiten bzw. zugehörigen Konfigurationsdateien festgestellt werden, sowie nicht geprüft werden, ob eine Konfigurationsdatei in den richtigen, dynamisch rekonfigurierbaren Bereich (d.h. in jenen Bereich, für den die Konfigurationsdatei generiert wurde) geladen wird.

In der Patentschrift US 6 785 816 B1 ist ein Verfahren für gesicherte Konfigurationsdaten für ein programmierbares Gerät genannt. Ein oder mehrere Speichergeräte speichern Konfigurationsdaten, die einen oder mehrere Konfigurationsbitströme und zugeordnete Authentifizierungs-Tags für jeden Konfigurationsbitstrom enthalten. Jedes Authentifizierungs-Tag wird unter Verwendung des zugeordneten Konfigurationsbitstroms erstellt. Eine programmierbare Vorrichtung, die betriebsfähig mit der einen oder den mehreren Speichervorrichtungen verbunden ist, empfängt einen der Konfigurationsbitströme. Das programmierbare Gerät verwendet das zugeordnete Authentifizierungs-Tag des Konfigurations-Bitstroms, um zu verifizieren, dass der Konfigurations-Bitstrom authentisch ist. Das programmierbare Gerät lädt den Konfigurationsbitstrom, wenn derjenige des Konfigurationsbitstroms authentisch ist, oder kann ihn andernfalls verwerfen.

In der Veröffentlichung Edward Chen ET AL: "Dynamic Partial Reconfigurable FPGA Framework For Agent Systems", 31. August 2011 (2011-08-31), XP055635372.

Es werden Hardwareerweiterungen von Software verwendet, um einzelne Threads oder in einem Agenten eingekapselte Threads auszuführen. Dabei wird nicht nur eine Ausführung als FPGA ermöglicht, in welcher die Hardwaremodule als Agenten betrachtet werden, sondern auch ein Mittel bereitgestellt, um das Kommunikationsnetzwerk für die Hardwareagenten selektiv als Komponente zu entwerfen. Das vorgeschlagene Framework ermöglicht es, Hardwareagenten so zu implementieren, dass sie gleichzeitig laufen, und ermöglicht es ihnen, miteinander zu kommunizieren, ohne dass eine CPU erforderlich ist.

### Darstellung der Erfindung

Der Erfindung liegt daher die Aufgabe zugrunde, ein Verfahren zur dynamischen und partiellen Rekonfiguration für ein elektronisches Bauteil bzw. eine programmierbare, integrierte Schaltung anzugeben, durch welches auf einfache und sichere Weise Funktionseinheiten bzw. jeweils zugehörige Konfigurationsdateien im Rahmen einer dynamischen, partiellen Rekonfiguration während des laufenden Betriebs des elektronischen Bauteils geändert und eindeutig dynamisch rekonfigurierbaren Bereichen des elektronischen Bauteils zugeordnet werden können, wobei eventuelle Veränderungen und/oder Manipulationen bei den Funktionseinheiten bzw. den jeweils zugehörigen Konfigurationsdateien rechtzeitig erkannt werden.

Diese Aufgabe wird durch ein Verfahren der eingangs genannten Art mit den Merkmalen gemäß dem unabhängigen Patentanspruch gelöst. Vorteilhafte Ausführungsformen der vorliegenden Erfindung sind in den abhängigen Ansprüchen beschrieben.

Erfindungsgemäß erfolgt die Lösung der Aufgabe durch ein Verfahren der eingangs angeführten Art zur dynamischen und partiellen Rekonfiguration eines elektronischen Bauteils, welches als programmierbare, integrierte Schaltung z.B. als Field Programmable Gate Array bzw. FPGA ausgeführt ist. Das elektronische Bauteil weist neben einem statischen Bereich zwei oder mehrere dynamisch rekonfigurierbaren Bereiche auf. Diese zumindest zwei dynamisch rekonfigurierbaren Bereiche können durch Nachladen einer jeweiligen Funktionseinheit während einer Laufzeit des elektronischen Bauteils umprogrammiert werden. Die jeweilige Funktionseinheit ist dabei in Form einer entsprechenden, zugehörigen Konfigurationsdatei, welche beispielsweise für den zumindest einen dynamisch rekonfigurierbaren Bereich individuell erstellt wurde, in einer zumeist externen Speichereinheit abgelegt.

Das erfindungsgemäße Verfahren ist dabei durch folgende Schritte gekennzeichnet:
- Erzeugen eines jeweiligen, zu den zumindest zwei dynamisch rekonfigurierbaren Bereichen zugehörigen kryptographischen Schlüssels;
- Verschlüsseln der jeweiligen, in den zumindest zwei dynamisch rekonfigurierbaren Bereichen des elektronischen Bauteils nachladbaren Konfigurationsdatei mit dem jeweiligen, zu den zumindest zwei dynamisch rekonfigurierbaren Bereichen zugehörigen, kryptographischen Schlüssel und Abspeichern der verschlüsselten Konfigurationsdatei in der Speichereinheit;
- Übertragen der jeweiligen verschlüsselten Konfigurationsdatei von der Speichereinheit in den elektronischen Bauteil;
- Prüfen, ob die jeweilige verschlüsselte Konfigurationsdatei mit dem jeweiligen kryptographischen Schlüssel der zumindest zwei dynamisch rekonfigurierbaren Bereiche entschlüsselt werden kann;
- und bei erfolgreicher Entschlüsselung der jeweiligen Konfigurationsdatei (vBF1, vBF2, vBF3) Umprogrammieren des jeweiligen der zumindest zwei dynamisch rekonfigu rierbaren Bereiche mittels der jeweiligen entschlüsselten Konfigurationsdatei.

Der Hauptaspekt der erfindungsgemäß vorgeschlagenen Lösung besteht darin, dass auf einfache Weise eine Zuordnung der jeweiligen, in den elektronischen Bauteil geladenen Konfigurationsdatei und den zumindest zwei dynamisch rekonfigurierbaren Bereiche n erkannt wird. D.h. es wird sichergestellt, dass jene Konfigurationsdatei in den jeweiligen dynamisch rekonfigurierbaren Bereich geladen wird, welche beispielsweise für diesen individuell generiert wurde und dass der entsprechende dynamisch rekonfigurierbare Bereich mittels Entkopplungslogik von der übrigen Schaltung für die Rekonfiguration zur Laufzeit entkoppelt ist. Damit können Funktionseinheiten bzw. Schaltungsteile auf sichere Weise und ohne Schaden für das elektronische Bauteil im Rahmen der dynamischen, partiellen Rekonfiguration während des laufenden Betriebs des elektronischen Bauteils geändert bzw. umprogrammiert werden. Folgeschäden durch z.B. eine Programmierung von "falschen" dynamisch rekonfigurierbaren Bereichen werden damit verhindert, da die jeweilige Konfigurationsdatei nur mit dem kryptographischen Schlüssel des entsprechenden dynamischen Bereichs entschlüsselt werden kann, in welchen diese geladen werden soll.

Weiterhin können durch das erfindungsgemäße Verfahren auf einfache Weise Veränderungen, Manipulationen, etc. der Konfigurationsdatei noch vor einem Laden in einen dynamisch rekonfigurierbaren Bereich erkannt werden. Dazu wird vor allem die Prüfung herangezogen, ob die jeweilige verschlüsselte Konfigurationsdatei mit Hilfe des kryptographischen Schlüssels des zumindest einen dynamisch rekonfigurierbaren Bereichs korrekt entschlüsselt werden kann.

Idealerweise wird bei einer fehlgeschlagenen Entschlüsselung der jeweiligen Konfigurationsdatei mit dem jeweiligen kryptographischen Schlüssel, welcher den zwei dynamisch rekonfigurierbaren Bereiche n zugeordnet wurde, die jeweilige Konfigurationsdatei verworfen bzw. nicht in den dynamisch rekonfigurierbaren Bereich geladen. Dadurch wird auf einfache Weise verhindert, dass eine z.B. veränderte oder manipulierte Konfigurationsdatei in den zumindest einen dynamisch rekonfigurierbaren Bereich geladen wird oder dass eine Konfigurationsdatei in einen dynamisch rekonfigurierbaren Bereich geladen wird, welchem die Konfigurationsdatei nicht zugeordnet ist. In der Folge können dadurch Folgeschäden für den elektronischen Bauteil z.B. aufgrund eines Kurzschlusses, etc. verhindert werden.

Eine bevorzugte Weiterentwicklung des Verfahrens sieht vor, dass vor dem Verschlüsseln - d.h. z.B. beim Abspeichern in der Speichereinheit - für die jeweilige Konfigurationsdatei ein Referenzprüfsummenwert erstellt wird, welcher gemeinsam mit der jeweiligen, verschlüsselten Konfigurationsdatei in der Speichereinheit abgelegt wird. Die Konfigurationsdatei wird auf diese Weise vor Veränderungen bzw. Manipulationen gesichert, da mittels des Referenzprüfsummenwertes eine Integrität der Daten bzw. der Konfigurationsdatei überprüft werden kann. Der Referenzprüfsummenwert kann beispielsweise herangezogen werden, um festzustellen, ob die Konfigurationsdatei mit dem kryptographischen Schlüssel des zumindest einen dynamisch rekonfigurierbaren Bereichs korrekt entschlüsselt werden kann. Der Referenzprüfsummenwert kann beispielsweise als so genannter Hashwert erstellt werden.

Dabei ist es weiterhin günstig, wenn nach der Entschlüsselung der jeweiligen Konfigurationsdatei für diese Konfigurationsdatei ein Prüfsummenwert berechnet wird. Der berechnete Prüfsummenwert kann dann mit dem zur jeweiligen Konfigurationsdatei in der Speichereinheit abgespeicherten Referenzprüfsummenwert verglichen werden. Bei einer Übereinstimmung des berechneten Prüfsummenwertes mit dem abgespeicherten Referenzprüfsummenwert kann dann die jeweilige Konfigurationsdatei für eine Umprogrammierung der zumindest zwei dynamisch rekonfigurierbaren Bereiche herangezogen werden. Auf diese einfache Weise wird sichergestellt, dass keine veränderte und/oder manipulierte Konfigurationsdatei in das elektronische Bauelement geladen und zum Rekonfigurieren des dynamisch rekonfigurierbaren Bereichs verwendet wird. Weiterhin kann damit eine korrekte Entschlüsselung der jeweiligen Konfigurationsdatei durch die don kryptographischen Schlüssel der zumindest zwei dynamisch rekonfigurierbaren Bereiche sichergestellt werden - d.h. es wird sichergestellt, dass nur eine Konfigurationsdatei in einen jeweiligen dynamisch rekonfigurierbaren Bereich des elektronischen Bauteils geladen wird, welche diesem jeweiligen Bereich zugeordnet bzw. für diesen jeweiligen Bereich vorgesehen ist und keinen Schaden verursachen kann. Vorteilhafterweise wird die jeweilige Konfigurationsdatei verworfen, wenn der nach Entschlüsselung berechnete Prüfsummenwert nicht mit dem zur jeweiligen Konfigurationsdatei abgespeicherten Referenzprüfsummenwert übereinstimmt. Damit wird sehr einfach verhindert, dass nicht korrekt entschlüsselte und/oder veränderte bzw. manipulierte Konfigurationsdateien in einen dynamisch rekonfigurierbaren Bereich bzw. in den elektronischen Bauteil geladen werden und dort gegebenfalls einen Schaden verursachen.

Ein zweckmäßige Ausgestaltung der gegenständlichen Erfindung sieht vor, dass der jeweilig zu den zumindest zwei dynamisch rekonfigurierbaren Bereichen zugehörigen kryptographischer Schlüssel im statischen Bereich des elektronischen Bauteils abgespeichert wird. Der jeweilige kryptographische Schlüssel, welcher dem zumindest einen dynamisch rekonfigurierbaren Bereich zugeordnet ist, kann dadurch im elektronischen Bauteil z.B. bei einer ersten Konfiguration des Bauteils bzw. der programmierbaren, integrierten Schaltung hinterlegt werden und ist z.B. für eine gesamte Betriebsdauer bzw. über eine gesamte Lebensdauer des elektronischen Bauteils verfügbar, um für eine Entschlüsselung der jeweils für den zumindest einen dynamisch rekonfigurierbaren Bereich während des laufenden Betriebs des elektronischen Bauteils geladene Konfigurationsdateien eingesetzt zu werden.

Bei einer bevorzugten Ausführungsvariante der gegenständlichen Erfindung wird vorgesehen, dass zum Entschlüsseln der jeweiligen Konfigurationsdatei, zum Prüfen, ob das Entschlüsseln der jeweiligen Konfigurationsdatei korrekt durchgeführt wurde und zum Umprogrammieren der zumindest zwei dynamisch rekonfigurierbaren Bereiche eine Steuereinheit und eine Prozessoreinheit eingesetzt werden, welche im statischen Bereich des elektronischen Bauteils angeordnet bzw. integriert werden. Von der Prozessoreinheit können bei mehreren dynamisch rekonfigurierbaren Bereichen die entsprechenden, kryptographischen Schlüssel aus dem statischen Bereich ausgelesen und z.B. für die Verschlüsselung und/oder Entschlüsselung von Konfigurationsdateien zur Verfügung gestellt werden. Weiterhin können z.B. von der Prozessoreinheit Konfigurationsdateien aus der meist externen Speichereinheit geladen werden, um dann beispielsweise von der Steuereinheit, welche im statischen Bereich der programmierbaren, integrierten Schaltung integriert ist, unter Verwendung der im statischen Bereich abgelegten kryptographischen Schlüssel entschlüsselt zu werden. Von der Steuereinheit können insbesondere weiterhin die Prüfung, ob die jeweilige Konfigurationsdatei mit dem jeweiligen kryptographischen Schlüssel korrekt entschlüsselt wurde, sowie ein Umprogrammieren des zumindest einen dynamisch rekonfigurierbaren Bereichs übernommen werden. Die Steuereinheit kann dazu beispielsweise als Anwendung bzw. Applikation ausgeführt sein, welche in den elektronischen Bauteil integriert wird. Weiterhin empfiehlt es sich, wenn die jeweilige Konfigurationsdatei für die jeweilige nachladbare Funktionseinheit als so genannte Bitstream-Datei ausgeführt wird. Eine Bitstream- oder Bitstrom-Datei umfasst üblicherweise eine Information zum Programmieren der programmierbaren, integrierten Schaltung bzw. entsprechender Schaltungsteile. Die Bitstream-Datei wird üblicherweise in einer Synthesephase aus einer so genannten Netzliste generiert, welche aus einem in einer Designphase erstellten Design der Schaltung bzw. Schaltungsteile abgeleitet wurde. Üblicherweise weisen derartige Bitstream-Dateien ein Format auf, welcher spezifisch für den jeweiligen Hersteller des elektronischen Bauteils bzw. der programmierbaren, integrierten Schaltung ist.

Idealerweise wird als elektronische Bauteil ein so genanntes Field Programmable Gate Array oder FPGA verwendet. Mit FPGAs können auf einfache Weise - durch Laden von Konfigurationsdateien - verschiedene Schaltungen und Funktionen realisiert und flexibel geändert werden.

### Kurzbeschreibung der Zeichnung

Die Erfindung wird nachfolgend in beispielhafter Weise anhand der beigefügten Figuren erläutert. Es zeigen:
Figur 1 einen schematischen und beispielhaften Aufbau eines Systems zur Durchführung des erfindungsgemäßen Verfahren zur dynamischen und partiellen Rekonfiguration eines elektronischen Bauteils
Figur 2 einen beispielhaften Ablauf des erfindungsgemäßen Verfahren zur dynamischen und partiellen Rekonfiguration eines elektronischen Bauteils.

### Ausführung der Erfindung

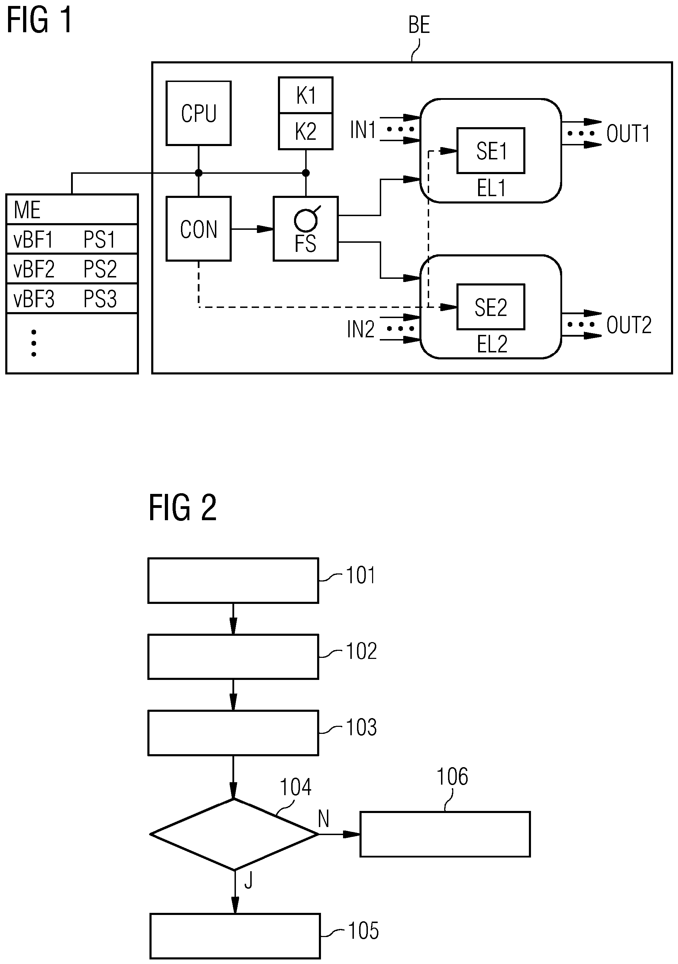

Figur 1 zeigt in schematischer Weise ein beispielhaftes System, welches zur Durchführung des erfindungsgemäßen Verfahrens zur dynamischen und partiellen Rekonfiguration eines elektronischen Bauelements BE eingerichtet ist. Dieses System umfasst zumindest das elektronische Bauelement BE sowie eine Speichereinheit ME.

Die Speichereinheit ME ist üblicherweise als externe Speichereinheit ME ausgeführt und dient vor allem zum Abspeichern von Konfigurationsdateien vBF1, vBF2, vBF3, welche für eine Konfiguration bzw. Rekonfiguration von Schaltungsteilen bzw. Funktionseinheiten des elektronischen Bauteils BE zur Laufzeit bzw. während des Betriebs des elektronischen Bauteils BE genutzt werden. Die Konfigurationsdateien vBF1, vBF2, vBF3 werden dabei verschlüsselt hinterlegt. Zusätzlich zu den Konfigurationsdateien vBF1, vBF2, vBF3 kann je Konfigurationsdatei vBF1, vBF2, vBF3 eine Referenzprüfsumme PS1, PS2, PS3 z.B. in Form eines Hashwerts erstellt und in der Speichereinheit ME gemeinsam mit der jeweiligen Konfigurationsdatei vBF1, vBF2, vBF3 abgespeichert werden.

Das elektronische Bauteil BE ist als programmierbare bzw. rekonfigurierbare, integrierte Schaltung wie z.B. als so genanntes Field Programmable Gate Array oder FPGA ausgeführt. Das in Figur 1 beispielhaft dargestellte elektronische Bauteil BE weist neben einem statischen Bereich zwei beispielhafte dynamisch rekonfigurierbare Bereiche SE1, SE2 auf. Für jeden der dynamisch rekonfigurierbaren Bereiche SE1, SE2 ist im statischen Bereich des elektronischen Bauelements BE - z.B. in einer internen Speichereinheit - ein kryptographischer Schlüssel K1, K2 hinterlegt. Dabei wurde z.B. für einen ersten dynamisch rekonfigurierbaren Bereich SE1 ein erster, kryptographischer Schlüssel K1 generiert und im statischen Bereich des Bauteils BE hinterlegt und für einen zweiten dynamisch rekonfigurierbaren Bereich SE2 ein zweiter kryptographischer Schlüssel K2 generiert und im statischen Bereich des Bauteils BE hinterlegt.

Die Schlüssel K1, K2 werden dazu verwendet, um die Konfigurationsdateien vBF1, vBF2, vBF3 vor dem Abspeichern mit jenem Schlüssel K1, K2 zu verschlüsseln bzw. vor dem Laden mit jenem Schlüssel K1, K2 zu entschlüsseln, welcher jenem dynamisch rekonfigurierbaren Bereich SE1, SE2 zugeordnet ist, in welchen die jeweilige Konfigurationsdatei vBF1, vBF2, vBF3 geladen werden soll. D.h. Konfigurationsdateien vBF1, vBF2, vBF3, welche z.B. in den ersten dynamisch rekonfigurierbaren Bereich SE1 geladen werden sollen, werden mit dem erste kryptographischen Schlüssel K1 vor dem Abspeichern in der Speichereinheit ME verschlüsselt bzw. vor dem Laden entschlüsselt. Konfigurationsdateien vBF1, vBF2, vBF3, welcher beispielsweise für den zweiten dynamisch rekonfigurierbaren Bereich SE2 bestimmt sind, werden mit dem zweiten kryptographischen Schlüssel K2 verschlüsselt bzw. sind nur mit dem zweiten kryptgraphischen Schlüssel korrekt entschlüsselbar.

Weiterhin weist jeder der zwei Bereich SE1, SE2 eine zugehörige Entkopplungslogik EL1, EL2 auf. Durch die Entkopplungslogik EL1, EL2 können die Signaleingänge IN1, IN2 und die Signalausgänge OUT1, OUT2 des jeweiligen Bereichs SE1, SE2 mittels eines Entkopplungssignals FS von einem restlichen Schaltungsteil - insbesondere vom statischen Bereich - des elektronischen Bauteils BE entkoppelt werden, um den jeweiligen dynamisch rekonfigurierbaren Bereich SE1, SE2 während des laufenden Betriebs des elektronischen Bauteils BE umkonfigurieren zu können. Für eine Rekonfiguration werden aus der Speichereinheit ME die Konfigurationsdateien vBF1, vBF2, vBF3 in das elektronische Bauteil BE bzw. in die jene dynamisch rekonfigurierbaren Bereiche SE1, SE2 geladen, für welche die jeweiligen Konfigurationsdateien vBF1, vBF2, vBF3 individuell erstellt worden sind. Das erfindungsgemäße Verfahren, welches anhand von Figur 2 noch erläutert wird, ermöglicht eine sichere Zuordnung der Konfigurationsdateien vBF1, vBF2, vBF3 zu den entsprechenden dynamisch rekonfigurierbaren Bereichen SE1, SE2, für welche die jeweiligen Konfigurationsdateien vBF1, vBF2, vBF3 erstellt wurden, sowie eine Möglichkeit Veränderungen und Manipulationen der Konfigurationsdateien vBF1, vBF2, vBF3 zu erkennen.

Im statischen Bereich des elektronischen Bauelements BE ist weiterhin eine Prozessoreinheit CPU vorgesehen sowie eine Steuereinheit CON integriert, welche z.B. als Anwendung bzw. Applikation ausgeführt ist. Von der Prozessoreinheit CPU können beispielsweise die kryptographischen Schlüssel K1, K2 aus dem statischen Bereich ausgelesen und z.B. für eine Verschlüsselung und/oder Entschlüsselung von der Konfigurationsdateien vBF1, vBF2, vBF3 zur Verfügung gestellt werden. Weiterhin können z.B. von der Prozessoreinheit CPU Konfigurationsdateien aus der meist externen Speichereinheit ME geladen werden, um dann beispielsweise von der Steuereinheit CON unter Verwendung der im statischen Bereich abgelegten kryptographischen Schlüssel K1, K2 entschlüsselt zu werden. Von der Steuereinheit CON können insbesondere weiterhin eine Prüfung, ob die jeweilige Konfigurationsdatei vBF1, vBF2, vBF3 mit dem jeweiligen kryptographischen Schlüssel K1, K2 korrekt entschlüsselt wurde, sowie ein Umprogrammieren der dynamisch rekonfigurierbaren Bereiche SE1, SE2 übernommen werden.

In Figur 2 ist beispielhaft und schematisch ein Ablauf des erfindungsgemäßen Verfahrens des erfindungsgemäßen Verfahren zur dynamischen und partiellen Rekonfiguration eines elektronischen Bauteils BE mit in einer Speichereinheit ME abgelegten Konfigurationsdateien vBF1, vBF2, vBF3 zur Laufzeit bzw. während des laufenden Betriebs des elektronischen Bauteils BE.

Für das erfindungsgemäße Verfahren werden in einem Generierungsschritt 101 kryptographische Schlüssel K1, K2 erzeugt. Dabei wird jedem dynamisch rekonfigurierbaren Bereich SE1, SE2 ein kryptographischer Schlüssel K1, K2 zugeordnet. D.h. dem ersten dynamisch rekonfigurierbaren Bereich SE1 wird z.B. der erste Schlüssel K1 und dem zweiten dynamisch rekonfigurierbaren Bereich SE2 wird z.B. der zweite Schlüssel K2 zugeordnet. Die kryptographischen Schlüssel K1, K2 werden dann im statischen Bereich der programmierbaren, integrierten Schaltung BE hinterlegt und können von dort von der Prozessoreinheit CPU ausgelesen werden.

In einem Verschlüsselungsschritt 102 werden die Konfigurationsdateien vBF1, vBF2, vBF3 verschlüsselt. Dazu wird zum Verschlüsseln der jeweiligen Konfigurationsdatei vBF1, vBF2, vBF3 jener kryptographische Schlüssel K1, K2 genutzt, welcher jenem dynamisch rekonfigurierbaren Bereich SE1, SE2 zugeordnet ist, in welchen die jeweilige Konfigurationsdatei vBF1, vBF2, vBF3 zur Laufzeit des elektronischen Bauteils BE nachgeladen werden soll. Sollen beispielsweise die beiden Konfigurationsdateien vBF1, vBF2 in den ersten dynamisch rekonfigurierbaren Bereich SE1 ladbar sein bzw. wurden diese Konfigurationsdateien vBF1, vBF2 individuell für den ersten Bereich SE1 erstellt, so werden diese Konfigurationsdatei vBF1, vBF2 mit dem ersten kryptographischen Schlüssel K1 des ersten dynamisch rekonfigurierbaren Bereichs SE1 verschlüsselt. Wurde eine weitere Konfigurationsdatei vBF3 für den zweiten dynamisch rekonfigurierbaren Bereich SE2 erstellt, so wird diese mit dem zweiten Schlüssel K2 verschlüsselt, welcher dem zweiten dynamisch rekonfigurierbaren Bereich SE2 zugeordnet ist. Die verschlüsselten Konfigurationsdateien vBF1, vBF2, vBF3 werden dann in der Speichereinheit ME abgespeichert, welche üblicherweise nicht im elektronischen Bauteil BE angeordnet ist und als nicht-flüchtiger Speicher ausgeführt ist. Üblicherweise wird in der Speichereinheit ME zusätzlich zu den verschlüsselten Konfigurationsdateien vBF1, vBF2, vBF3 eine Zusatzinformation hinterlegt, welche angibt, welchem dynamisch rekonfigurierbaren Bereich SE1, SE2 die jeweilige Konfigurationsdateien vBF1, vBF2, vBF3 zugeordnet ist.

Zusätzlich kann im Verschlüsselungsschritt 102 für jede Konfigurationsdatei vBF1, vBF2, vBF3 vor der Verschlüsselung ein Referenzprüfsummenwert PS1, PS2, PS3 z.B. als Hashwert erstellt werden, um die jeweilige Konfigurationsdatei vBF1, vBF2, vBF3 beispielsweise vor Veränderungen zu sichern. Der jeweilige Referenzprüfsummenwert PS1, PS2, PS3 wird dann gemeinsam mit der jeweiligen Konfigurationsdatei vBF1, vBF2, vBF3 in der Speichereinheit ME abgelegt. D.h. der Referenzprüfsummenwert PS1 der ersten Konfigurationsdatei vBF1 wird gemeinsam mit der verschlüsselten ersten Konfigurationsdatei vBF1 in der Speichereinheit ME gespeichert, der Referenzprüfsummenwert PS2 der zweiten Konfigurationsdatei vBF2 mit der verschlüsselten zweiten Konfigurationsdatei vBF2 und der Referenzprüfsummenwert PS3 der dritten Konfigurationsdatei vBF3 mit der verschlüsselten dritten Konfigurationsdatei vBF3.

Soll während der Laufzeit des elektronischen Bauteils BE beispielsweise der erste dynamisch rekonfigurierbare Bereich SE1 mittels einer zugehörigen, ersten Konfigurationsdatei vBF1 geändert werden bzw. eine auf der ersten Konfigurationsdatei vBF1 basierende Funktionseinheit in den ersten dynamisch rekonfigurierbaren Bereich SE1 nachgeladen werden, so wird ein Ladeschritt 103 ausgeführt. Im Ladeschritt 103 wird z.B. von der Prozessoreinheit CPU die verschlüsselte erste Konfigurationsdatei vBF1 gemeinsam mit dem zugehörigen Referenzprüfsummenwert PS1 aus der Speichereinheit ME aufgerufen und an den elektronischen Bauteil BE übertragen. Weiterhin wird die zur verschlüsselten ersten Konfigurationsdatei vBF1 abgelegte Zusatzinformation ausgelesen, durch welche angegeben wird, dass die erste Konfigurationsdatei vBF1 dem ersten dynamisch rekonfigurierbaren Bereich SE1 zugeordnet ist.

In einem Prüfschritt 104 wird dann überprüft, ob die verschlüsselte, erste Konfigurationsdatei vBF1 mit dem ersten kryptographischen Schlüssel K1, welcher dem ersten dynamisch rekonfigurierbaren Bereich SE1 zugeordnet ist, entschlüsselt werden kann. Dazu kann beispielsweise der erste Schlüssel K1 von der Prozessoreinheit CPU aus dem statischen Bereich ausgelesen und der Steuereinheit CON zur Verfügung gestellt werden. Von der Steuereinheit CON kann versucht werden, die erste Konfigurationsdatei vBF1 mit dem ersten kryptographischen Schlüssel K1 des ersten dynamisch rekonfigurierbaren Bereichs SE1 zu entschlüsseln. Nach der erfolgter Entschlüsselung wird geprüft, ob die erste Konfigurationsdatei vBF1 korrekt entschlüsselt wurde.

Dazu wird nach der Entschlüsselung z.B. von der Steuereinheit CON ein Prüfsummenwert der entschlüsselten ersten Konfigurationsdatei vBF1 berechnet. Dieser Prüfsummenwert wird mit dem Referenzsummenwert PS1, welche gemeinsam mit der ersten Konfigurationsdatei vBF1 in der Speichereinheit ME abgespeichert ist, verglichen. Stimmen der nach der Entschlüsselung für die erste Konfigurationsdatei vBF1 berechnete Prüfsummenwert mit dem in der Speichereinheit ME abgelegten Referenzprüfsummenwert PS1 der ersten Konfigurationsdatei vBF1 überein, dann wurde die erste Konfigurationsdatei korrekt mit dem ersten kryptographischen Schlüssel K1 entschlüsselt und nicht verändert bzw. manipuliert.

Anhand der korrekten Entschlüsselung der ersten Konfigurationsdatei vBF1 mit dem ersten Schlüssel K1 ist sichergestellt, dass die Konfigurationsdatei vBF1 für den ersten dynamisch rekonfigurierbaren Bereich SE1 erstellt wurde. Von der Steuereinheit CON wird dann für einen Rekonfigurationsschritt 105 ein Entkopplungssignal FS an den ersten dynamisch rekonfigurierbaren Bereich SE1 weitergeleitet, welchem der erste Schlüssel K1 zugeordnet ist. Durch das Entkopplungssignal FS wird die Entkopplungslogik EL1 des ersten dynamisch rekonfigurierbaren Bereichs SE1 aktiviert und die Signaleingänge IN1 sowie Signalausgänge OUT1 des ersten Bereichs SE1 von der restlichen Schaltung getrennt. Danach kann die entschlüsselte, erste Konfigurationsdatei vBF1 in den ersten dynamisch rekonfigurierbaren Bereich SE1 z.B. von der Steuereinheit CON geladen werden, um den ersten dynamisch rekonfigurierbaren Bereich SE1 neu zu programmieren.

Wird im Prüfschritt 104 nach der Entschlüsselung der ersten Konfigurationsdatei vBF1 festgestellt, dass die Konfigurationsdatei vBF1 mit dem ersten kryptographischen Schlüssel K1 nicht korrekt entschlüsselt wurde, so wird ein Verwerfungsschritt 106 ausgeführt. Ein Fehlschlagen der Entschlüsselung und/oder eine Veränderung bzw. Manipulation der ersten Konfigurationsdatei vBF1 kann beispielsweise durch den Vergleich des nach der Entschlüsselung der ersten Konfigurationsdatei vBF1 berechneten Prüfsummenwertes mit dem zur ersten Konfigurationsdatei vBF1 in der Speichereinheit ME abgelegten Referenzprüfsummenwert PS1 festgestellt werden. Stimmen der berechnete Prüfsummenwert nicht mit dem gespeicherten Referenzprüfsummenwert PS1 überein, dann wurde die entsprechende Konfigurationsdatei vBF1 mit dem falschen kryptographischen Schlüssel K1 entschlüsselt und/oder verändert bzw. manipuliert. Die erste Konfigurationsdatei vBF1 darf dann z.B. nicht in den ersten dynamisch rekonfigurierbaren Bereich SE1 geladen werden und wird beispielsweise verworfen.

Wurde in der Speichereinheit SE zu den Konfigurationsdateien vBF1, vBF2, vBF3 keinen Zusatzinformation hinterlegt, welche angibt zu welchen dynamisch rekonfigurierbaren Bereichen SE1, SE2 die jeweiligen Konfigurationsdateien vBF1, vBF2, vBF3 zugeordnet sind, so kann beispielsweise vor dem Verwerfen der ersten Konfigurationsdatei vBF1 noch versucht werden, ob die erste Konfigurationsdatei vBF1 mit einem anderen, im statischen Bereich abgelegten kryptographischen Schlüssel K2 korrekt entschlüsselbar ist. D.h. es wird beispielsweise von der Steuereinheit CON versucht, die erste Konfigurationsdatei vBF1 mit einem weiteren - z.B. zweiten - kryptographischen Schlüssel K2, welcher dem zweiten dynamisch rekonfigurierbaren Bereich SE2 zugeordnet ist, zu entschlüsseln. Wird im Prüfschritt 104 festgestellt, dass die erste Konfigurationsdatei vBF1 mit dem zweiten Schlüssel K2 korrekt entschlüsselt werden kann, so wird der Rekonfigurationsschritt 105 für den zweiten dynamisch rekonfigurierbaren Bereich SE2 ausgeführt, da die erste Konfigurationsdatei vBF1 beispielsweise für den zweiten Bereich erstellt wurde bzw. zugeordnet ist. Dabei wird dann das Entkopplungssignal FS an den zweiten dynamisch rekonfigurierbaren Bereich SE2 gesendet, um die Signaleingänge IN2 und die Signalausgänge OUT2 des zweiten Bereichs SE2 von der restlichen Schaltung zu entkoppeln und die erste Konfigurationsdatei vBF1 in den zweiten dynamisch rekonfigurierbaren Bereich SE2 für die Umprogrammierung geladen.

Wird im Prüfschritt 104 allerdings festgestellt, dass die erste Konfigurationsdatei vBF1 auch mit dem zweiten, im statischen Bereich abgelegten kryptographischen Schlüssel K2 ebenfalls nicht korrekt entschlüsselt werden kann, so wird der Verwerfungsschritt 106 ausgeführt und die erste Konfigurationsdatei vBF1 verworfen.

Für den Fall, dass keine Zusatzinformation zu den Konfigurationsdateien vBF1, vBF2, vBF3 in der Speichereinheit ME hinterlegt wurde, bedeutet das: kann eine aus der Speichereinheit ME geladene, verschlüsselte Konfigurationsdatei vBF1, vBF2, vBF3 mit keinem der im statischen Bereich abgelegten, kryptographischen Schlüssel K1, K2 korrekt entschlüsselt werden, so ist diese Konfigurationsdatei vBF1, vBF2, vBF3 z.B. verändert worden bzw. keinem dynamisch rekonfigurierbaren Bereich SE1, SE2 zugeordnet. Wird im Prüfschritt 104 erkannt, dass die Konfigurationsdatei vBF1, vBF2, vBF3 mit einem der im statischen Bereich abgelegtem, kryptographischen Schlüssel K1, K2 korrekt entschlüsselbar ist, so kann anhand des jeweils passenden Schlüssel K1, K2 erkannt werden, in welchen dynamisch konfigurierbaren Bereich SE1, SE2 die Konfigurationsdatei vBF1, vBF2, vBF3 zu laden ist. Eine korrekte Entschlüsselung sowie gegebenenfalls vorliegende Veränderungen bzw. Manipulationen der jeweiligen Konfigurationsdatei vBF1, vBF2, vBF3 können beispielsweise durch einen Vergleich des nach der Entschlüsselung der jeweiligen Konfigurationsdatei vBF1, vBF2, vBF3 berechneten Prüfsummenwertes mit dem jeweils gemeinsam mit der jeweiligen Konfigurationsdatei vBF1, vBF2, vBF3 abgespeicherten Referenzprüfsummenwert PS1, PS2, PS3 sehr einfach festgestellt werden.

## Patentansprüche

1. Verfahren zur dynamischen und partiellen Rekonfiguration eines elektronischen Bauteils (BE), welches als programmierbare, integrierte Schaltung, ausgeführt ist, wobei das elektronische Bauteil (BE) neben einem statischen Bereich zumindest zwei dynamisch rekonfigurierbare Bereiche (SE1, SE2) aufweist, welche durch Nachladen einer Funktionseinheit, welche in Form einer entsprechenden, zugehörigen Konfigurationsdatei (vBF1, vBF2, vBF3) für die zumindest zwei dynamisch rekonfigurierbaren Bereiche (SE1, SE2) in einer Speichereinheit (ME) abgelegt ist, während einer Laufzeit des elektronischen Bauteils (BE) umprogrammiert wird, wobei folgende Schritte ausgeführt werden:
- Erzeugen eines jeweiligen, zu den zumindest zwei dynamisch rekonfigurierbaren Bereichen (SE1, SE2) zugehörigen kryptographischen Schlüssels (K1, K2, 101);
- Verschlüsseln der jeweiligen, in den zumindest zwei dynamisch rekonfigurierbaren Bereichen (SE1, SE2) des elektronischen Bauteils (BE) nachladbaren Konfigurationsdatei (vBF1, vBF2, vBF3) mit dem jeweiligen, zu den zumindest zwei dynamisch rekonfigurierbaren Bereichen (SE1, SE2) zugehörigen, kryptographischen Schlüssel (K1, K2) und Abspeichern der verschlüsselten Konfigurationsdatei (vBF1, vBF2, vBF3) in der Speichereinheit (ME, 102);
- Übertragen der jeweiligen verschlüsselten Konfigurationsdatei (vBF1, vBF2, vBF3) von der Speichereinheit (ME) in den elektronischen Bauteil (BE, 103);
- Prüfen (104), ob die jeweilige verschlüsselte Konfigurationsdatei (vBF1, vBF2, vBF3) mit dem jeweiligen kryptographischen Schlüssel (K1, K2) der zumindest zwei dynamisch rekonfigurierbaren Bereiche (SE1, SE2) entschlüsselt werden kann;
- und bei erfolgreicher Entschlüsselung der jeweiligen Konfigurationsdatei (vBF1, vBF2, vBF3) Umprogrammieren des jeweiligen der zumindest zwei dynamisch rekonfigurierbaren Bereiche (SE1, SE2) mittels der jeweiligen entschlüsselten Konfigurationsdatei (vBF1, vBF2, vBF3, 105) .

2. Verfahren nach Anspruch 1, ***dadurch gekennzeichnet, dass*** bei einer fehlgeschlagenen Entschlüsselung der jeweiligen Konfigurationsdatei (vBF1, vBF2, vBF3) mit dem jeweiligen kryptographischen Schlüssel (K1, K2) der zumindest zwei dynamisch rekonfigurierbaren Bereiche die jeweilige Konfigurationsdatei (vBF1, vBF2, vBF3) verworfen wird (106).

3. Verfahren nach einen der Ansprüche 1 bis 2, ***dadurch gekennzeichnet, dass*** vor dem Verschlüsseln für die jeweilige Konfigurationsdatei (vBF1, vBF2, vBF3) ein Referenzprüfsummenwert (PS1, PS2, PS3) erstellt wird, welcher gemeinsam mit der jeweiligen, verschlüsselten Konfigurationsdatei (vBF1, vBF2, vBF3) in der Speichereinheit (ME) abgelegt wird (102).

4. Verfahren nach Anspruch 3, ***dadurch gekennzeichnet, dass*** nach der Entschlüsselung der jeweiligen Konfigurationsdatei (vBF1, vBF2, vBF3) ein Prüfsummenwert berechnet wird, dass der berechnete Prüfsummenwert mit dem zur jeweiligen Konfigurationsdatei (vBF1, vBF2, vBF3) in der Speichereinheit (ME) abgespeicherten Referenzprüfsummenwert (PS1, PS2, PS3) verglichen wird (104), und dass bei Übereinstimmung des berechneten Prüfsummenwertes mit dem abgespeicherten Referenzprüfsummenwert (PS1, PS2, PS3) der zumindest zwei dynamisch rekonfigurierbaren Bereiche (SE1, SE2) mittels der jeweilige Konfigurationsdatei (vBF1, vBF2, vBF3) umprogrammiert wird (105).

5. Verfahren nach Anspruch 4, **dadurch gekennzeichnet, dass** bei fehlender Übereinstimmung des berechneten Prüfsummenwertes mit dem abgespeicherten Referenzprüfsummenwert (PS1, PS2, PS3) die jeweilige Konfigurationsdatei (vBF1, vBF2, vBF3) verworfen wird (106).

6. Verfahren nach einem der vorangegangenen Ansprüche,
**dadurch gekennzeichnet, dass** der jeweilig zu den zumindest zwei dynamisch rekonfigurierbaren Bereichen (SE1, SE2) zugehörige kryptographische Schlüssel (K1, K2) im statischen Bereich des elektronischen Bauteils (BE) abgespeichert wird (101).

7. Verfahren nach einem der vorangegangenen Ansprüche,
**dadurch gekennzeichnet, dass** zum Entschlüsseln der jeweiligen Konfigurationsdatei (vBF1, vBF2, vBF3), zum Prüfen, ob die jeweilige verschlüsselte Konfigurationsdatei (vBF1, vBF2, vBF3) mit dem jeweiligen kryptographischen Schlüssel (K1, K2) der zumindest zwei dynamisch rekonfigurierbaren Bereiche (SE1, SE2) entschlüsselt werden kann und zum Umprogrammieren der zumindest zwei dynamisch rekonfigurierbaren Bereiche (SE1, SE2) eine Steuereinheit (CON) und eine Prozessoreinheit (CPU) eingesetzt werden, welche im statischen Bereich des elektronischen Bauteils angeordnet werden.

8. Verfahren nach einem der vorangegangenen Ansprüche,
**dadurch gekennzeichnet, dass** die jeweilige Konfigurationsdatei (vBF1, vBF2, vBF3) für die jeweilige nachladbare Funktionseinheit als so genannte Bitstream- oder Bitstrom-Datei ausgeführt wird.

9. Verfahren nach einem der vorangegangenen Ansprüche,
***dadurch gekennzeichnet, dass*** als elektronische Bauteil (BE) ein so genanntes Field Programmable Gate Array oder FPGA verwendet wird.

## Claims

1. Method for the dynamic and partial reconfiguration of an electronic component (BE), which is designed as a programmable integrated circuit, wherein the electronic component (BR), in addition to a static region, has at least two dynamically reconfigurable regions (SE1, SE2), which are reprogrammed during runtime of the electronic component (BE) by reloading a functional unit, which is stored in a storage unit (ME) in the form of a corresponding associated configuration file (vBF1, vBF2, vBF3) for the at least two dynamically reconfigurable regions (SE1, SE2), wherein the following steps are carried out:
- generating a respective cryptographic key (K1, K2, 101) associated with the at least two dynamically reconfigurable regions (SE1, SE2);
- encrypting the respective configuration file (vBF1, vBF2, vBF3) that can be reloaded in the at least two dynamically reconfigurable regions (SE1, SE2) of the electronic component (BE) with the respective cryptographic key (K1, K2) associated with the at least two dynamically reconfigurable regions (SE1, SE2) and storing the encrypted configuration file (vBF1, vBF2, vBF3) in the storage unit (ME, 102);
- transferring the respective encrypted configuration file (vBF1, vBF2, vBF3) from the storage unit (ME) into the electronic component (BE, 103);
- checking (104) whether the respective encrypted configuration file (vBF1, vBF2, vBF3) can be decrypted using the respective cryptographic key (K1, K2) of the at least two dynamically reconfigurable regions (SE1, SE2);
- and, in the event of successful decryption of the respective configuration file (vBF1, vBF2, vBF3), reprogramming the respective one of the at least two dynamically reconfigurable regions (SE1, SE2) by means of the respective decrypted configuration file (vBF1, vBF2, vBF3, 105).

2. Method according to claim 1, **characterised in that,** in the event of a failed decryption of the respective configuration file (vBF1, vBF2, vBF3) using the respective cryptographic key (K1, K2) of the at least two dynamically reconfigurable regions, the respective configuration file (vBF1, vBF2, vBF3) is discarded (106).

3. Method according to one of claims 1 to 2, **characterised in that,** before the encryption for the respective configuration file (vBF1, vBF2, vBF3), a reference check sum value (PS1, PS2, PS3) is created, which together with the respective encrypted configuration file (vBF1, vBF2, vBF3) is stored (102) in the storage unit (ME).

4. Method according to claim 3, **characterised in that,** after the decryption of the respective configuration file (vBF1, vBF2, vBF3), a check sum value is calculated, that the calculated check sum value is compared (104) with the reference check sum value (PS1, PS2, PS3) stored in the storage unit (ME) for the respective configuration file (vBF1, vBF2, vBF3), and that, in the event of the calculated check sum value matching the stored reference check sum value (PS1, PS2, PS3), the at least two dynamically reconfigurable regions (SE1, SE2) are reprogrammed (105) by means of the respective configuration file (vBF1, vBF2, vBF3).

5. Method according to claim 4, **characterised in that,** in the event of the calculated check sum value not matching the stored reference check sum value (PS1, PS2, PS3), the respective configuration file (vBF1, vBF2, vBF3) is discarded (106).

6. Method according to one of the preceding claims, **characterised in that** the cryptographic key (K1, K2) respectively associated with the at least two dynamically reconfigurable regions (SE1, SE2) is stored (101) in the static region of the electronic component (BE).

7. Method according to one of the preceding claims, **characterised in that,** in order to decrypt the respective configuration file (vBF1, vBF2, vBF3), to check whether the respectively encrypted configuration file (vBF1, vBF2, vBF3) can be decrypted using the respective cryptographic key (K1, K2) of the at least two dynamically reconfigurable regions (SE1, SE2) and to reprogram the at least two dynamically reconfigurable regions (SE1, SE2), a control unit (CON) and a processor unit (CPU) are used, which are arranged in the static region of the electronic component.

8. Method according to one of the preceding claims, **characterised in that** the respective configuration file (vBF1, vBF2, vBF3) for the respective reloadable functional unit is designed as what is known as a bitstream file.

9. Method according to one of the preceding claims, **characterised in that** what is known as a Field Programmable Gate Array or FPGA is used as electronic component (BE).

## Revendications

1. Procédé de reconfiguration dynamique et partielle d'un composant électronique (BE) qui est réalisé sous la forme d'un circuit intégré programmable, dans lequel le composant électronique (BE) présente, en plus d'une zone statique, au moins deux zones reconfigurables de manière dynamique (SE1, SE2) qui peuvent être reprogrammées pendant une durée de fonctionnement du composant électronique (BE) par le rechargement d'une unité fonctionnelle qui est stockée dans une unité de mémoire (ME) sous la forme d'un fichier de configuration (vBF1, vBF2, vBF3) respectif associé pour les au moins deux zones reconfigurables de manière dynamique (SE1, SE2), dans lequel les étapes suivantes sont exécutées :
- création d'une clé cryptographique (K1, K2, 101) respective associée aux au moins deux zones reconfigurables de manière dynamique (SE1, SE2) ;
- cryptage du fichier de configuration (vBF1, vBF2, vBF3) respectif rechargeable dans les au moins deux zones reconfigurables de manière dynamique (SE1, SE2) du composant électronique (BE) avec la clé cryptographique (K1, K2) respective associée aux au moins deux zones reconfigurables de manière dynamique (SE1, SE2) et enregistrement du fichier de configuration (vBF1, vBF2, vBF3) crypté dans l'unité de mémoire (ME, 102) ;
- transmission du fichier de configuration (vBF1, vBF2, vBF3) respectif crypté depuis l'unité de mémoire (ME) vers le composant électronique (BE, 103) ;
- vérification (104) pour déterminer si le fichier de configuration (vBF1, vBF2, vBF3) respectif crypté peut être décrypté avec la clé cryptographique (K1, K2) respective des au moins deux zones reconfigurables de manière dynamique (SE1, SE2) ;
- et, en cas de décryptage réussi du fichier de configuration (vBF1, vBF2, vBF3) respectif, reprogrammation de chacune des au moins deux zones de configuration dynamique (SE1, SE2) au moyen du fichier de configuration (vBF1, vBF2, vBF3, 105) respectif décrypté.

2. Procédé selon la revendication 1, **caractérisé en ce que,** en cas d'échec du décryptage du fichier de configuration (vBF1, vBF2, vBF3) respectif avec la clé cryptographique (K1, K2) respective des au moins deux zones reconfigurables de manière dynamique, le fichier de configuration (vBF1, vBF2, vBF3) respectif est rejeté (106).

3. Procédé selon l'une des revendications 1 à 2, **caractérisé en ce que,** avant le cryptage, une valeur de somme de contrôle de référence (PS1, PS2, PS3) est établie pour le fichier de configuration (vBF1, vBF2, vBF3) respectif, laquelle est enregistrée (102) dans l'unité de mémoire (ME) conjointement avec le fichier de configuration (vBF1, vBF2, vBF3) respectif crypté.

4. Procédé selon la revendication 3, **caractérisé en ce que,** après le décryptage du fichier de configuration (vBF1, vBF2, vBF3) respectif, une valeur de somme de contrôle est calculée, **en ce que** la valeur de somme de contrôle calculée est comparée (104) à la valeur de somme de contrôle de référence (PS1, PS2, PS3) enregistrée dans l'unité de mémoire (ME) pour le fichier de configuration (vBF1, vBF2, vBF3) respectif, et **en ce que**, en cas de concordance de la valeur de somme de contrôle calculée avec la valeur de somme de contrôle de référence (PS1, PS2, PS3) enregistrée, les au moins deux zones reconfigurables de manière dynamique (SE1, SE2) sont reprogrammées (105) au moyen du fichier de configuration respectif (vBF1, vBF2, vBF3).

5. Procédé selon la revendication 4, **caractérisé en ce que,** en cas de non-concordance de la valeur de somme de contrôle calculée avec la valeur de somme de contrôle de référence (PS1, PS2, PS3) enregistrée, le fichier de configuration (vBF1, vBF2, vBF3) respectif est rejeté (106).

6. Procédé selon l'une des revendications précédentes, **caractérisé en ce que** la clé cryptographique (K1, K2) associée à chacune des au moins deux zones reconfigurables de manière dynamique (SE1, SE2) est enregistrée (101) dans la zone statique du composant électronique (BE).

7. Procédé selon l'une des revendications précédentes, **caractérisé en ce que,** pour décrypter le fichier de configuration (vBF1, vBF2, vBF3) respectif, pour vérifier si le fichier de configuration (vBF1, vBF2, vBF3) crypté respectif peut être décrypté avec la clé cryptographique (K1, K2) respective des au moins deux zones reconfigurables de manière dynamique (SE1, SE2) et pour reprogrammer les au moins deux zones reconfigurables de manière dynamique (SE1, SE2), une unité de commande (CON) et une unité de traitement (CPU) sont utilisées, lesquelles sont disposées dans la zone statique du composant électronique.

8. Procédé selon l'une des revendications précédentes, **caractérisé en ce que** le fichier de configuration (vBF1, vBF2, vBF3) respectif pour l'unité fonctionnelle rechargeable respective est exécuté sous la forme appelée fichier de flux binaire ou bitstream.

9. Procédé selon l'une des revendications précédentes, **caractérisé en ce qu'**un réseau de portes programmables sur site ou FPGA est utilisé comme composant électronique (BE).
